# EUROPEAN PATENT SPECIFICATION

(11) **EP 0 559 672 B1**
(45) Date of publication and mention of the grant of the patent: **03.04.1996**
(21) Application number: 91919816.8
(22) Date of filing: 10.10.1991
(51) Int. Cl.: B62D 27/02

(54) **CONNECTING DEVICE**
VERBINDUNGSVORRICHTUNG
DISPOSITIF DE RACCORDEMENT

(30) Priority: 01.11.1990 SE 9003495
(43) Date of publication of application: 15.09.1993
(73) Proprietor: AB VOLVO, S-405 08 Göteborg (SE)
(72) Inventor: ARONSSON, Karl-Erik, S-661 00 Säffle (SE); TOMASSON, Tom, S-662 00 Amal (SE)
(86) International application number: SE9100684
(87) International publication number: WO9207748

(56) References cited:
- EP-A- 0 186 625
- NO-B- 131 498
- NO-C- 72 059
- SE-B- 439 912

## Description

The subject invention concerns a connecting device designed to fit together profiled members in junction areas in vehicle chassis, vehicle bodywork and similar components by means of angle irons and fasteners.

A device of this nature is shown and described in the European Patent Applicaton No. 0 186 625, which comprises the features defined in the preamble of claim 1. In this prior-art device the fasteners are in the form of bolt joints, comprising bolts and nuts or preferably romboid nut discs. In this case, the profile members are formed with undercut grooves in which the nut discs are received when the joint-forming components are tightened.

This and other similar, prior-art devices do, however, make the assembly of large vehicle chassis and bodywork components a rather complicated and time-consuming task. In addition, the bolt joints are exposed to stress in the direction of the bolt with consequential risks of fatigue failure in the components involved, particularly in the aluminium profile members, having a special configuration, and in the angle irons.

The primary object of the subject invention is to eliminate the above disadvantages and to this end it suggests a device allowing maximum use of standard-configuration profile members and by means of which the assembly may be carried out in a rapid and uncomplicated manner without requiring unduly specialized training while at the same time future expected increased demands on safety are met, for example with respect to the mounting of safety belts in buses and to roll-over safety means.

This object and others related thereto are achieved by forming the profile members, at least in the junction areas, with facing grooves delimited by wall portions in which grooves fastening portions of complementary configuration formed on the angle irons may be received, and also by arranging the fasteners so as to extend transversely through the wall portions and the fastening portions to create a tightening frictional joint between the profile members and the angle irons.

The invention will be described in closer detail in the following with reference to the accompanying drawings illustrating an embodiment which is the preferred one at present and wherein
Fig. 1 is a perspective view as seen obliquely from the side of a junction in which the profile members are interconnected by means of angle irons and fasteners, and

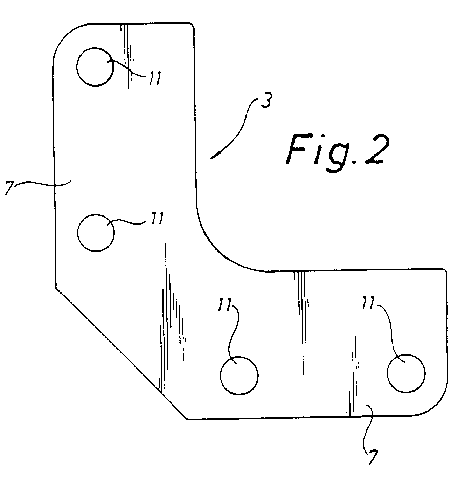

Fig. 2 is an angle iron in accordance with Fig. 1 in a lateral view.

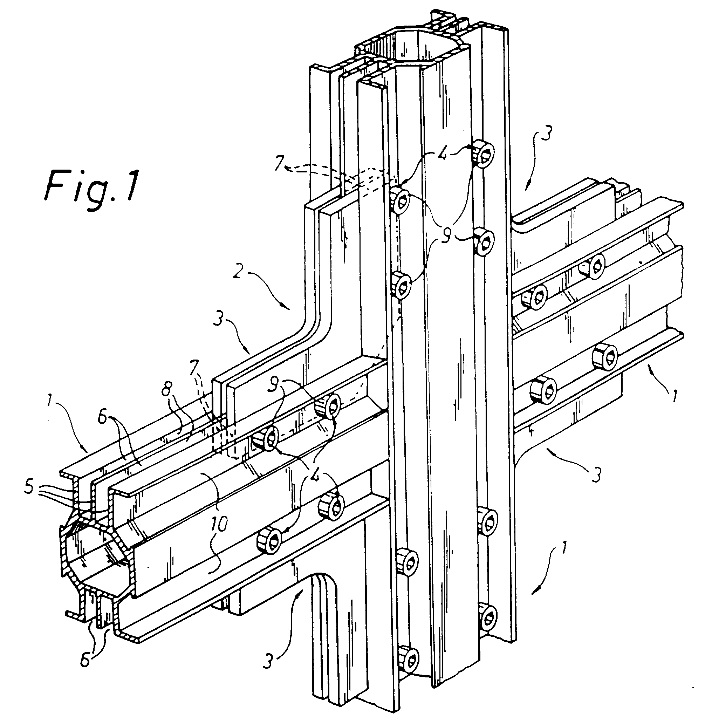

The embodiment of the device in accordance with the invention as illustrated in Fig. 1 thus is intended for interconnection of profile members, generally designated by numeral 1, in one of several junctions 2 in a vehicle chassis or bodywork, in the preferred embodiment in a bus, a railway carriage or the like, with the aid of angle irons 3 and fasteners 4.

At least in the area of the junctions 2, the profile members 1 present facing grooves 6 which are delimited by wall portions 5 and which extend in the lengthwise direction of the profile members 1 and essentially at right angles to that direction. Preferably, the grooves 6 have an outwardly open U-shaped configuration in cross section with the wall portions 5 being formed by the legs of the U-shape, as illustrated in Fig. 1.

The U-shaped grooves 6 serve to receive fastening portions 7 of complementary shape formed on the angle irons 3, the latter therefore preferably being L-shaped, as seen in side elevation. The fastening portions 7 thus form part of the legs of the L-shaped iron and they are received in the U-shaped grooves 6 in tight-fit engagement with the inner faces 8 of the wall portions 5.

As clearly apparent from Fig. 1, the fasteners 4 extend transversely through the wall portions 5 of the profile members 1 and the fastening portions 7 of the angle irons 3, i.e. at right angles to the profile members and the angle irons. In their mounted position, the fasteners 4 thus create a tightening frictional joint between the profile members 1 and the angle irons 3 with the load on the fasteners being exerted at right angles to the lengthwise extension thereof, and the risks of fatigue failure in the profile members and/or the angle irons thus are minimized.

In accordance with the preferred embodiment illustrated, the fasteners preferably are in the form of bolt joints 4, but also rivet joints, screw joints or similar interconnection means are possible. In their assembled position, the bolt heads 9 of the joints 4 and the nuts thereof, not shown, are tightly in engagement with the external faces 10 of the wall portions 5, if needed supplemented with washers or similar inserts, not shown. The shanks, not shown, of the bolt joints 4 extend through transverse holes 11 formed in the wall and fastening portions 5, 7 of respectively the profile members 1 and the angle irons 3.

As also clearly apparent from Fig. 1, each profile member 1 preferably comprises two parallel grooves 6 including an intermediate wall portion 5, formed on respectively the top and bottom side of the member. The number of grooves could, however, be smaller or larger than the two shown. Each groove 6 thus receives the fastening portion 7 of the associated angle iron 3, the number of which equals that of the grooves, said angle irons 3 being positioned opposite each other, i.e. in congruent relationship.

The profile members 1 as well as the angle irons 3 preferably are made from light metal, such as aluminium or an aluminium alloy. Other light metals and alloys thereof may, of course, be used. In this case, the profile members 1 preferably are extruded with the grooves 6 extending along the entire length of the profile members.

The invention should not be regarded as limited to the embodiment described in the aforegoing and illustrated in the drawings but may be modified in a number of various ways within the scope of the claims.

## Claims

1. A connecting element to fit together profile members (1) in junction areas (2) in e.g. vehicle chassis, vehicle bodywork and the like by means of angle irons (3) and fasteners (4), **characterized** in that at least in the area of the junctions (2) the profile members comprise facing grooves (6) which are delimited by wall portions (5) for reception therein of fastening portions (7) of complementary configuration formed on the angle irons (3), and in that the fasteners (4) extend transversely through the wall and fastening portions (5, 7) and create a tightening frictional joint between said profile members (1) and the angle irons (3).

2. A connecting element as claimed in claim 1, **characterized** in that the grooves (6) formed in the profile members (1) extend in the lengthwise direction and essentially at right angles to that direction.

3. A connecting element as claimed in claims 1 and 2, **characterized** in that the grooves (6) have an outwardly open U-shaped configuration in cross section, and in that the wall portions (5) are formed by the legs of the U-shape.

4. A connecting element as claimed in claim 3, **characterized** in that the angle irons (3) are L-shaped in side elevation, and in that the fastening portions (7) thereof form part of the legs of the L-shape and are received in the U-shaped grooves (6) in abutting engagement with the inner faces (8) of the wall portions (5).

5. A connecting element as claimed in any one of the preceding claims, **characterized** in that the fasteners are formed by bolt joints (4) the heads (9) and nuts of which abut against the external faces (10) of the wall portions (5), possibly with insertion therebetween of washers and the like, and with the bolt shanks extending through holes (11) formed in the wall and fastening portions (5, 7).

6. A connecting element as claimed in any one of the preceding claims, **characterized** in that each profile member (1) has at least two parallel grooves (6) including an intermediate wall portion (5), each groove receiving the fastening portion (7) of the associated angle iron (3), the number of which equals that of the grooves (6) and which angle irons are positioned in opposite relationship.

7. A connecting element as claimed in any one of the preceding claims, **characterized** in that the profile members (1) are manufactured from preferably extruded light metal, such as aluminium or an aluminium alloy, and in that the grooves (6) extend along the entire length of the profile members.

8. A connecting element as claimed in any one of the preceding claims, **characterized** in that the angle irons (3) are made from light metal, such as aluminium or an aluminium alloy.

## Patentansprüche

1. Verbindungselement zur gemeinsamen Befestigung von Profilteilen (1) in Anschlußbereichen (2), beispielsweise von Fahrzeugschassis, Fahrzeugaufbauten und dergleichen, mittels Winkeleisen (3) und Befestigungselementen (4),
dadurch gekennzeichnet,
daß wenigstens in dem Bereich der Anschlüsse (2) die Profilteile Verblendungsnuten (6) besitzen, die von Wandabschnitten (5) begrenzt sind, und in denen Befestigungsabschnitte (7) von komplementärer Gestaltung aufnehmbar sind, die an den Winkeleisen (3) gebildet sind, und daß die Befestigungselemente (4) sich quer durch die Wand und die Befestigungsabschnitte (5, 7) erstrecken und einen festigenden Reibschluß zwischen den Profilteilen (1) und den Winkeleisen (3) bilden.

2. Verbindungselement nach Anspruch 1,
dadurch gekennzeichnet,
daß sich die in den Profilteilen (1) gebildeten Nuten (6) in Längsrichtung und im wesentlichen in rechten Winkeln zu dieser Richtung erstrecken.

3. Verbindungselement nach Anspruch 1 und 2,
dadurch gekennzeichnet,
daß die Nuten (6) einen Querschnitt mit einer nach außen offenen U-förmigen Gestaltung besitzen, und daß die Wandabschnitte (5) von den Schenkeln der U-Form gebildet sind.

4. Verbindungselement nach Anspruch 3,
dadurch gekennzeichnet,
daß die Winkeleisen (3) in Seitenansicht L-förmig sind, und daß deren Befestigungsabschnitte (7) einen Teil der Schenkel der L-Form bilden und in den U-förmigen Nuten (6) in Anlageeingriff mit den Innenflächen (8) der Wandabschnitte (5) aufgenommen sind.

5. Verbindungselemente nach einem der vorangehenden Ansprüche,
dadurch gekennzeichnet,
daß die Befestigungselemente mittels Bolzenverbindungen (4) gebildet sind, deren Köpfe (9) und Muttern gegen die Außenflächen (10) der Wandabschnitte (5), ggf. mit Zwischeneinsatz von Unterlegscheiben und dergleichen, anliegen, und wobei sich die Bolzenschäfte durch Löcher (11) erstrecken, die in der Wand und in den Befestigungsabschnitten (5, 7) gebildet sind.

6. Verbindungselement nach einem der vorangehenden Ansprüche,
dadurch gekennzeichnet,
daß jedes Profilteil (1) wenigstens zwei parallele Nuten (6) mit einem Zwischenwandabschnitt (5) besitzt, wobei jede Nut den Befest:igungsabschnitt (7) des zugeordneten Winkeleisens (3) aufnimmt, dessen Zahl der der Nuten (6) entspricht, und wobei die Winkeleisen in gegenüberliegender Zuordnung positioniert sind.

7. Verbindungselement nach einem der vorangehenden Ansprüche,
dadurch gekennzeichnet,
daß die Profilteile (1) aus einem vorzugsweise extrudierten Leichtmetall, wie Aluminium oder einer Aluminiumlegierung, hergestellt sind, und daß die Nuten (6) sich längs der gesamten Länge der Profilteile erstrecken.

8. Verbindungselement nach einem der vorangehenden Ansprüche,
dadurch gekennzeichnet,
daß die Winkeleisen (3) aus Leichtmetall bestehen, wie beispielsweise Aluminium oder einer Aluminiumlegierung.

## Revendications

1. Elément d'assemblage destiné à assembler des éléments profilés (1) dans des zones de jonction (2), par exemple, dans un châssis de véhicule, une carrosserie de véhicule et analogue à l'aide d'équerres (3) et d'organes de fixation (4), caractérisé en ce qu'au moins dans la région des jonctions (2), les éléments profilés comprennent des rainures de face (6) qui sont délimitées par des parties de parois (5) destinées à recevoir intérieurement des parties de fixation (7) de configuration complémentaire formées sur les équerres (3), et en ce que les organes de fixation (4) s'étendent transversalement à travers les parties de parois et les parties de fixation (5, 7) et créent un joint bloqué à friction entre lesdits profilés (1) et les équerres (3).

2. Elément d'assemblage selon la revendication 1, caractérisé en ce que les rainures (6) formées dans les profilés (1) s'étendent dans la direction longitudinale et sensiblement perpendiculairement à cette direction.

3. Elément d'assemblage selon les revendications 1 et 2, caractérisé en ce que les rainures (6) ont, en coupe, une configuration en U s'ouvrant vers l'extérieur et en ce que les parties de parois (5) sont formées par les branches de la forme de U.

4. Elément d'assemblage selon la revendication 3, caractérisé en ce que les équerres (3) sont en forme de L en élévation de côté et en ce que leurs parties de fixation (7) font partie des branches de la forme de L et sont logées dans les rainures en forme de U (6), en appui contre les faces internes (8) des parties de parois (5).

5. Elément d'assemblage selon une quelconque des revendications précédentes, caractérisé en ce que les organes de fixation sont formés par des fixations du type boulon (4) dont les têtes (9) et les écrous s'appuient contre les faces extérieures (10) des parties de parois (5), éventuellement avec interposition de rondelles et analogues, les tiges des boulons traversant des trous (11) formés dans les parties de parois et dans les parties de fixation (5, 7).

6. Elément d'assemblage selon une quelconque des revendications précédentes, caractérisé en ce que chaque profilé (1) possède au moins deux rainures parallèles (6) encadrant une partie de paroi intermédiaire (5), chaque rainure recevant la partie de fixation (7) de l'équerre (3) correspondante, le nombre des équerres étant égal à celui des rainures (6), et ces équerres étant positionnées dans des positions opposées.

7. Elément d'assemblage selon une quelconque des revendications précédentes, caractérisé en ce que les profilés (1) sont fabriqués en un métal léger, de préférence extrudé, tel que l'aluminium ou un alliage d'aluminium, et en ce que les rainures (6) s'étendent sur toute la longueur des profilés.

8. Elément d'assemblage selon une quelconque des revendications précédentes, caractérisé en ce que les équerres (3) sont faites d'un métal léger tel que l'aluminium ou un alliage d'aluminium.
